# EUROPÄISCHE PATENTSCHRIFT

(11) **EP 2 762 824 B1**
(45) Veröffentlichungstag und Bekanntmachung des Hinweises auf die Patenterteilung: **14.10.2015**
(21) Anmeldenummer: 13153291.3
(22) Anmeldetag: 30.01.2013
(51) Int. Cl.: F28F 25/08, B01J 19/32

(54) **Verbindungselement für Gittereinbauten**
Connecting element for grid inserts
Élément de liaison pour objets encastrés à grille

(43) Veröffentlichungstag der Anmeldung: 06.08.2014
(73) Patentinhaber: GEA Energietechnik GmbH, 44809 Bochum (DE)
(72) Erfinder: Gettmann, Viktor, 45711 Datteln (DE); Krus, Marcus Wilhelmus Maria, 6941 DW Loil (NL)
(74) Vertreter: Griepenstroh, Jörg

(56) Entgegenhaltungen:
- EP-A1- 0 371 475
- EP-A1- 0 503 547
- WO-A1-2007/049951
- WO-A1-2008/091166
- DE-A1-102005 042 428
- GB-A- 2 450 807
- US-A- 3 751 017
- US-A- 4 451 411

## Beschreibung

Die Erfindung betrifft ein Verbindungselement für Gittereinbauten mit den Merkmalen im Oberbegriff des Patentanspruchs 1.

Das Kühlprinzip in einem Kühlturm basiert auf dem Gegenstromprinzip, Kreuzstromprinzip oder Kombination von beiden, wobei ein tropfenförmig, rieselndes Medium in einen Luftstrom gebracht wird. Einbauten innerhalb des Kühlturms dienen zur Verteilung des zu kühlenden Fluides und zur Vergrößerung der Kühloberfläche. Sie werden häufig als Matten, Folien oder auch als Gitter konfiguriert.

Es ist im Stand der Technik bekannt, die Kühleinbauten hängend zu montieren. An einer Tragstruktur werden hierzu Stangen oder seilförmige Tragelemente hängend befestigt. Von den unteren Enden her, werden auf diese Tragelemente abwechselnd Hülsen und sogenannte Verbindungselemente gegen geschoben. Am unteren Ende des Tragelements werden die Hülsen und Verbindungselemente am Herunterrutschen gesichert.

Die so montierten Verbindungselemente besitzen von einer horizontalen Grundplatte nach oben weisende Zapfen, die für den Eingriff mit den Gitterelementen vorgesehen sind. Nach der Montage der Hülsen und Verbindungselemente werden also die Gitterelemente auf die Zapfen gesteckt, so dass eine Vielzahl von zueinander beabstandeten, übereinanderliegenden Lagen von Gitterelementen geschaffen werden. Ein solches Verbindungselement ist aus EP 0 371 475 A1 bekannt.

Die Montage der einzelnen Verbindungselemente bzw. des gesamten Gittereinbaus ist vergleichsweise einfach. Es gibt jedoch Nachteile bei einem späteren Austausch eines einzelnen Verbindungselements. Da die Verbindungselemente und Hülsen wie Perlen auf einer Kette an einem Tragelement angeordnet sind, kann ein einzelnes zerstörtes Verbindungselement nicht ohne weiteres ausgetauscht werden. Ein neues Verbindungselement kann wie bei einer Kette nur vom unteren Ende des Tragelementes her aufgefädelt werden, indem das langgestreckte Tragelement durch die zentrale Durchgangsöffnung der Grundplatte des Verbindungselements gesteckt wird. Das setzt leider voraus, dass nicht nur diejenigen Gitterelemente entfernt werden, die von dem defekten Verbindungselement gehalten worden sind, sondern auch die nachfolgenden Gitterelemente. In der Folge kommt es immer wieder zu aufwendigen Reparaturen, die maßgeblich dadurch begründen sind, dass die Verbindungselemente und Hülsen wie auf einer Perlenschnur auf das Tragelement gefädelt sind.

Hiervon ausgehend liegt der Erfindung die Aufgabe zugrunde, ein Verbindungselement für Gittereinbauten aufzuzeigen, welches hinsichtlich der Demontage und Montage vereinfacht ist und insbesondere nachträglich einen kostengünstigen Austausch ermöglicht.

Diese Aufgabe ist bei einem Verbindungselement mit den Merkmalen des Patentanspruchs 1 gelöst.

Vorteilhafte Weiterbildungen der Erfindung sind Gegenstand der Unteransprüche.

Das erfindungsgemäße Verbindungselement für Gittereinbauten besitzt in bekannter Weise eine horizontale Grundplatte mit von der Grundplatte nach oben weisenden Zapfen. Die Zapfen sind für den Eingriff mit dem Gitterelement vorgesehen. Die Gitterelemente bilden insgesamt die Gittereinbauten. In der Grundplatte befindet sich in bekannter Weise eine vertikale Durchgangsöffnung, welche in der Einbaulage von einem stangen- oder seilförmigen Tragelement durchsetzt ist. In der Praxis handelt es sich bei dem Tragelement in der Regel um einen Draht. Prinzipiell können aber auch stangenförmige Tragelemente mit höherer Biegesteifigkeit oder seilförmige Tragelemente mit hoher Biegsamkeit zum Einsatz kommen. In jenem Fall handelt es sich um eine hängende Anordnung, bei welcher die Verbindungselemente von unten gestützt werden.

Die einzelnen Verbindungselemente sollen durch Hülsen beabstandet werden, so dass mehrere übereinanderliegende Etagen von Gitterelementen aufgebaut sein können. Die Hülsen stützen sich an einem Kragen an der Grundplatte ab. Dieser Kragen umgibt die Durchgangsöffnungen und dient somit als Auflager für die Hülsen.

Im Unterschied zum Stand der Technik, bei welchem die Verbindungselemente einstückig ausgebildet sind und nur vom Ende der Tragelemente her aufgefädelt werden können, sieht die Erfindung vor, dass das Verbindungselement aus zwei Hälften besteht. Die Einteilung in zwei Hälften ermöglicht es die Teilungsebene, in welcher die beiden Hälften wieder zusammengefügt werden können, in den Bereich der Durchgangsöffnung zu legen, so dass die Durchgangsöffnung teilweise in der einen Hälfte und teilweise in der anderen Hälfte liegt. Die Teilungsebene verläuft insbesondere senkrecht zur Grundplatte. Dadurch können die Hälften unter Einschluss des Tragelements lösbar miteinander gekoppelt werden. Diese Koppelbarkeit ermöglicht es, die Hälften jeweils seitlich an das Tragelement heranzuführen und miteinander zu verbinden, so dass die Durchgangsöffnung das Tragelement umschließt. Mit anderen Worten ist es nicht erforderlich, das zweiteilige Verbindungselement vom Ende des Tragelements her auf das Tragelement aufzufädeln. Vielmehr kann das Tragelement von den beiden Hälften umschlossen werden. Das Tragelement muss daher nicht mehr in die Durchgangsöffnungen gesteckt werden.

Der enorme Vorteil ist, dass bei einer etagenweisen Anordnung der einzelnen Gitterelemente, die in einem Abstand von ca. 0,5 m bis 1 m über eine Höhe von 1 bis ca. 20 m aufgebaut werden, ein einzelnes Tragelement ausgetauscht werden kann, ohne dass dieser Austausch die darüberliegenden oder darunterliegenden Tragelemente beeinflusst oder das weitere Verbindungselement oder Hülse von dem Tragelement entfernt werden müssten. Der Reparaturaufwand, der mit dem Austausch eines Verbindungselements verbunden ist, wird dadurch erheblich reduziert. Stillstandzeiten werden minimiert und der betroffene Kühlturm kann früher wieder in Betrieb genommen werden.

Die erfindungsgemäßen Verbindungselemente sind in ihren Abmessungen und ihrer Konfiguration vorteilhaft an die bekannten, einteiligen Verbindungselemente angepasst, so dass hinsichtlich der Geometrie und der Anordnung der Gittereinbauten keine Änderungen erforderlich sind. Beispielsweise zählen Gitterelemente mit Öffnungen zur Aufnahme von Zapfen zum Stand der Technik, bei denen die Öffnungen in einem Abstand von 30 mm angeordnet sind. In Anpassung an dieses Rastermaß besitzen auch die nach oben weisenden Zapfen des erfindungsgemäßen Verbindungselements dasselbe Rastermaß, so dass die einzelnen Gitterelemente exakt in ihrer ihnen ursprünglich zugedachten Lage positioniert werden können.

Es wird als besonders vorteilhaft angesehen, wenn die beiden Hälften identisch konfiguriert sind. Bei identisch konfigurierten Hälften kann der Aufwand zur Herstellung eines Formwerkzeugs minimiert werden. Die Hälften bzw. das Verbindungselement besteht aus Gewichtsgründen vorzugsweise aus Kunststoff insbesondere aus PP oder PVC. Darüber hinaus kann durch Reduzierung der Teilevielfalt die Lagehaltung vereinfacht und die Fertigung rationalisiert werden.

Die Hälften können über Steckverbindungen miteinander verbunden werden, wobei jede Hälfte eine bestimmte Anzahl von Zapfen aufweist, die in Richtung der anderen Hälfte weisen und wobei jede Hälfte gleichzeitig eine bestimmte Anzahl von Öffnungen aufweist, zur Aufnahme von Zapfen der anderen Hälfte.

Die Verbindung zwischen den beiden Hälften kann auch über Schraubverbindungen erfolgen. Es ist wenigstens eine Schraubverbindung vorgesehen. Die Schraubbolzen können als separate Bauteile durch dafür vorgesehene Öffnungen in den Hälften gesteckt werden.

Denkbar ist aber auch, dass eine Schnappverbindung zwischen den Hälften realisiert wird. Hierzu können an den jeweiligen Hälften materialeinheitlich einstückig ausgebildete Zapfen ausgebildet werden oder auch separate Zapfen montiert werden. Die Zapfen können einen endseitigen Abschnitt besitzen, der als Federzunge ausgebildet ist und beim Zusammenfügen der Hälften in eine Rastposition federt.

Alternativ ist es auch möglich, Steckverbindungen vorzusehen, die nicht durch eine Federwirkungen oder eine Schraubverbindung gesichert werden, sondern über einen Querriegel. Ein Bolzen der Steckverbindung besitzt hierzu eine Hinterschneidung. Diese Hinterschneidung kann innenliegend sein und durch einen Stecksplint gesichert sein. Alternativ befindet sich die Hinterschneidung außenseitig. Der Bolzenkopf ist mithin gegenüber der Hinterschneidung verdickt. Die außenseitige Hinterschneidung soll hierbei funktional mit einem Sicherungselement zusammenwirken, das in die Hinterschneidung fasst und dadurch den Bolzen gegen Zurückrutschen sichert. Ein solches Sicherungselement kann ein federnder Clip sein oder auch ein geschlitztes Bauteil, das gabelförmig in die Hinterschneidungen greift und dadurch den Bolzenkopf fixiert. Der Bolzenkopf kann hinsichtlich seiner Geometrie beliebig gestaltet sein. Der Bolzenkopf kann rund ebenso wie eckig sein. Natürlich muss zur Realisierung der Steckverbindung ein zum Querschnitt des Bolzenkopfes passender Durchbruch in der korrespondierenden Hälfte vorhanden sein, um die beiden Hälften miteinander verbinden zu können.

Die Verbindungselemente nehmen Lasten auf, die jeweils von oben an den Grundplatten angreifen und über die Zapfen in die Grundplatte eingeleitet werden. Je nach Art der Befestigung der beiden Hälften, können sowohl oberhalb als auch unterhalb der Grundplatte entsprechende Bolzenverbindungen, Schraubverbindungen oder Schnappverbindungen oder Kombinationen von Bolzenverbindungen, Schraubverbindungen oder Schnappverbindungen angeordnet sein. Bei oberhalb und unterhalb der Grundplatte liegenden Koppelelementen in Form von Bolzen einer Steckverbindung ist es möglich, diese mittels eines gemeinsamen Sicherungselements zu fixieren. Hierzu kann das Sicherungselement eine Öffnung in der Grundplatte durchsetzen. Das Sicherungselement wird beispielsweise von oben über den in der oberen Hälfte der Grundplatte liegenden Bolzen gesteckt, durch die Öffnung in der Grundplatte geführt und anschließend über den zweiten Bolzen gesteckt, um auch diesen am Zurückrutschen aus der anderen Hälfte des Verbindungselements zu hindern. Durch diese Maßnahme kann die Anzahl der Sicherungselemente reduziert werden und die Montage vereinfacht werden.

Denkbar ist auch, dass oberhalb bzw. unterhalb einer Grundplatte liegende Koppelelemente von Bolzen, d. h. solche, die in Horizontalrichtung nebeneinander liegen durch ein gemeinsames Sicherungselement gesichert werden. Natürlich ist es im Rahmen der Erfindung auch möglich, oberhalb der Grundplatte und unterhalb der Grundplatte liegende Koppelelemente durch ein gemeinsames Sicherungselement zu fixieren, sofern in der Grundplatte entsprechende Öffnungen vorhanden sind und sofern die Fügebewegung des Sicherungselements es zulässt, dass mehrere der Bolzen mit einer einzelnen Fügebewegung des Sicherungselements gesichert werden. Vorzugsweise befinden sich daher Bolzen in der oberen Hälfte und der unteren Hälfte der Grundplatten vertikal übereinander.

Bevorzugt sind daher oberhalb der Grundplatte mehr Koppelelemente angeordnet als unterhalb der Grundplatte. Der untere Bereich des Verbindungselements wird eher auf Druck beansprucht. Die in diesem Bereich angeordneten Koppelelemente werden auf Druck belastet und dienen eher zur Fixierung der Hälften, während die oberen Koppelelemente auf Zug belastet werden.

Die Trennebene zwischen den beiden Hälften kann in Längsrichtung des Verbindungselements aber auch in Querrichtung des Verbindungselements verlaufen. Dies kommt auf die konkrete Geometrie und den Einsatzfall des Verbindungselements an. Theoretisch kann die Trennebene auch diagonal verlaufen. Da die Erfindungsgemäßen Verbindungselemente aber in der Regel an Kreuzungspunkten zwischen vier Gitterelementen zum Einsatz kommen, bietet sich eine rechteckige Konfiguration der Verbindungselemente an, wobei die vertikale Trennebene zwischen den Verbindungselementen nicht im Bereich der Zapfen an der Grundplatte verläuft, sondern zwischen den Zapfen. Das sind insbesondere die Mittellängsebene und die Mittelquerebene des Verbindungselements.

Die Erfindung wird nachfolgend anhand der in den Zeichnungen schematisch dargestellten Ausführungsbeispiele näher erläutert. Es zeigt:
- Figur 1: in perspektivischer Ansicht eine Draufsicht auf Gittereinbauten mit einem erfindungsgemäßen Verbindungselement;
- Figur 2: den Ausschnitt II der Figur 1 in vergrößerter Darstellung;
- Figur 3: in perspektivischer Ansicht von schräg unten die Gitteranordnung der Figur 1:
- Figur 4: in vergrößerter Darstellung den Ausschnitt IV der Figur 3;
- Figur 5: in perspektivischer Darstellung das Verbindungselement der Figuren 1 bis 4;
- Figur 6: das Verbindungselement der Figuren 1 bis 4 in perspektivischer Darstellung von schräg unten;
- Figur 7: in perspektivischer Darstellung eine zweite Ausführungsform eines Verbindungselements;
- Figur 8: das Verbindungselement der Figur 7 in einer Ansicht von schräg unten;
- Figur 9: eine dritte Ausführungsform eines Verbindungselements mit querverlaufender Teilungsebene in perspektivischer Darstellung;
- Figur 10: das Verbindungselement der Figur 9 in einer Ansicht von schräg unten;
- Figur 11: eine perspektivische Darstellung einer vierten Ausführungsform eines Verbindungselements mit einem Klicksystem;
- Figur 12: das Verbindungselement der Figur 11 in einer weiteren Ansicht von schräg oben;
- Figur 13: eine fünfte Ausführungsform eines Verbindungselements in perspektivischer Darstellung mit quer verlaufender Trennebene;
- Figur 14: das Verbindungselement der Figur 13 in einer Ansicht von schräg unten;
- Figur 15: eine sechste Ausführungsform eines Verbindungselements in perspektivischer Ansicht von schräg oben;
- Figur 16: das Verbindungselement der Figur 15 in einer perspektivischen Ansicht von schräg unten;
- Figur 17: eine Explosionsdarstellung einer Hälfte des Verbindungselements der Figur 15;
- Figur 18: eine vergrößerte Darstellung eines Teilbereichs der Figur 17;
- Figur 19: eine weitere Ausführungsform eines Verbindungselements in perspektivischer Darstellung von schräg oben und
- Figur 20: das Verbindungselement der Figur 19 in einer weiteren perspektivischen Ansicht.

In den nachfolgenden Figurenbeschreibungen werden auch bei unterschiedlichen Ausführungsbeispielen im Wesentlichen identische oder baugleiche Bauteile mit einheitlichen Bezugszeichen gekennzeichnet. Begriffe wie oben, unten, links, rechts usw. beziehen sich ausschließlich auf die in den jeweiligen Figuren gewählten beispielhaften Darstellungen und Positionen des Ausführungsbeispiels.

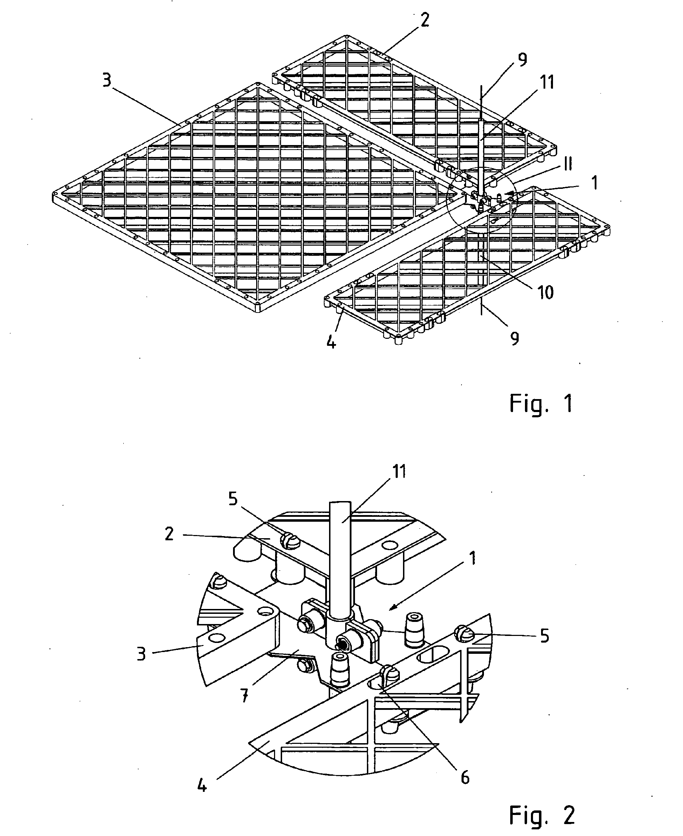

Figur 1 zeigt die Einbausituation eines Verbindungselements 1, wie es in der vergrößerten Darstellung der Figur 2 noch besser zu erkennen ist. Das Verbindungselement 1 ebenso wie die Gitterelemente 2-4 bestehen aus Kunststoff. Die Gitterelemente 2-4 sind im Wesentlichen horizontal angeordnet. Sie liegen auf den Verbindungselementen 1 auf. Die Verbindungselemente 1 selbst besitzen in der Bildebene der Figuren 1 und 2 nach oben weisende Zapfen 5, die dafür vorgesehen sind, in Öffnungen 6 in den Gitterelementen 2-4 zu fassen. Bei diesem Ausführungsbeispiel handelt es sich um eine Schnappverbindung, was an den gespalteten und verdickten Köpfen der Zapfen 5 zu erkennen ist, die oben aus den Öffnungen 6 ragen.

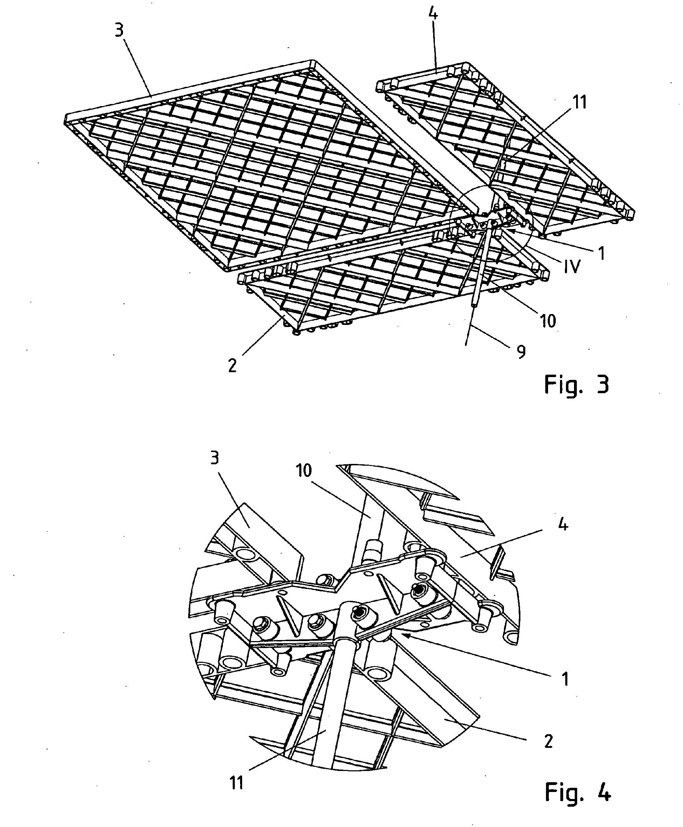

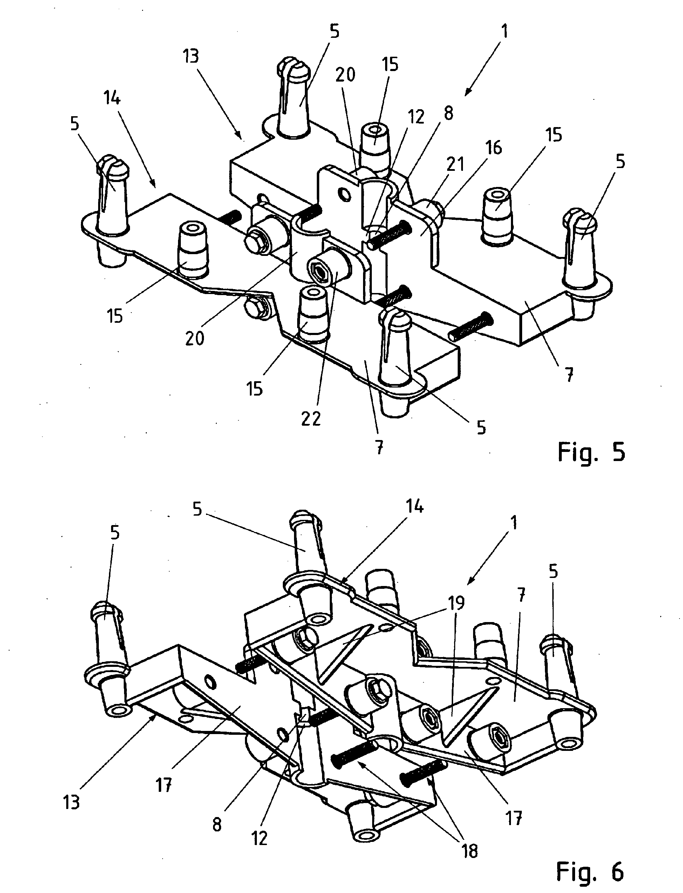

Die Verbinder 1 besitzen eine Grundplatte 7 auf der die Zapfen 5 angeordnet sind. In der Mitte der Grundplatte 5 befindet sich eine Durchgangsöffnung 8 wie sie in den Figuren 5 und 6 zu erkennen ist. Die Figuren 5 und 6 zeigen den Verbinder der Figur 1 ohne die Gitterelemente 2-4. Durch die Durchgangsöffnung 8 wird in der Einbaulage ein Tragelement 9 geführt, das in Figur 1 und in Figur 3 als Draht zu erkennen ist. Dieses stangen- oder seilförmige Tragelement 9 ist von Hülsen 10, 11 umgeben, die sich jeweils auf der Oberseite und auf der Unterseite der Grundplatte 7 befinden. Die Figuren 3 und 4 verdeutlichen, wie sich die Hülsen 10, 11 nach oben und unten an das Verbindungselement 1 anschließen. Die Hülsen 10, 11 sind nicht fest mit der Grundplatte 7 verbunden, sondern liegen nur auf einem Kragen 12 auf. Figur 5 zeigt den Kragen 12 von oben. Figur 6 zeigt den Kragen 12 von unten. Über diesen Kragen 12 stützt sich das Tragelement 9 auf der sich unterhalb der Grundplatte 7 anschließenden Hülse 10 ab. Die untere Hülse 10 ist nicht an dem drahtförmigen Tragelement 9 befestigt, sondern dient nur als Abstandshalter. In gleicher Weise können eine Vielzahl von identisch aufgebauten Lagen von Gitterelementen 2-4 übereinander montiert werden. Das heißt auf eine Hülse 10 kann wiederum ein Tragelement 1 folgen. Dieser Wechsel kann sich mehrfach fortsetzen. Die Last der nach oben anschließenden Hülsen 10 und weiteren Tragelemente 1 die wiederum mit Gitterelementen 2-4 belastet sind, werden also über den Kragen 12 von oben in die Grundplatte 7 eingeleitet, allerdings gleich wieder in die darunter liegende Hülse 10 übertragen, so dass die Grundplatte 7 selbst nur diejenigen Kräfte übertragen muss, die von den Gitterelementen 2-4 in der jeweiligen Ebene stammen zusätzlich in den Kragen 12 eingebracht werden müssen.

Figur 5 zeigt das Verbindungselement 1 der Figuren 1 bis 4 in eine Explosionsdarstellung. Das Verbindungselement 1 ist geteilt. Es besteht aus zwei Hälften 13, 14. Die Grundplatte 7 des Verbindungselements 1 ist in der zusammengebauten Position im Wesentlichen rechteckig und mithin länger als breit.

Die Teilungsebene des Verbindungselements 1 erstreckt sich in Längsrichtung, d. h. parallel zur Längsseite und mittig durch die Durchgangsöffnung 8. Die Durchgangsöffnung 8 befindet sich also teilweise in der einen Hälfte 13 und teilweise in der anderen Hälfte 14. Die nach oben weisenden Zapfen sind jeweils im Eckbereich der einzelnen Hälften 13, 14 angeordnet. Das sind diejenigen Zapfen mit Einrastfunktion. Darüber hinaus sind zwischen den im Eckbereich liegendenden Zapfen längsseitig zwei weitere Zapfen 15 an den jeweiligen Hälften 13, 14 angeordnet. Diese Zapfen 15 dienen als Zentrierzapfen. Sie sind ebenso wie die eckseitigen Zapfen 5 leicht konisch, so dass es zu einer Selbstzentrierung der Gitterelemente auf den Zapfen kommt. Das Rastermaß beträgt von Mittelachse zu Mittelachse der Zapfen beispielsweise einheitlich 30 mm. Dadurch können die Verbindungselemente 1 sowohl längs als auch quer eingesetzt werden. Es gibt in den Gitterelementen 2-4 im Eckbereich immer eine Mehrzahl von Öffnungen, so dass je nach Anordnung des Verbindungselementes 1 vier Gitterelemente mit jeweils zwei Zapfen 5, 15 verbunden werden können. Die Kombinationsmöglichkeiten sind vielfältig.

Die beiden Hälften 13, 14 werden über Schraubverbindungen miteinander verbunden. Hierzu sind an den jeweiligen Grundplatten 7 in der Bildebene nach oben und unten, dass heißt senkrecht zur Grundplatte 7 stehende Flansche 16, 17, vorgesehen. Die Flansche 16, 17 begrenzen die in Längsrichtung verlaufende Teilungsebene. In der zusammengebauten Position der beiden Hälften 13, 14 werden die Flansche über Schraubverbindungen 18 fest aneinander gepresst. Die Flansche 17 auf der Unterseite der Grundplatte 7 können zusätzlich über Streben 19 gegenüber der Grundplatte 7 gestaucht sein. Die Schraubverbindungen 18 sind im unteren Flansch 17 vierfach vorhanden und im oberen Flansch 16 zweifach. Die einander zugewandten Flanschflächen sind jeweils von Öffnungen für die Schraubverbindungen 18 durchbrochen und von der Durchgangsöffnung 8 unterbrochen. Der Kragen 12 mündet ebenfalls in die Flansche 16, 17. Die Flansche 16, 17 werden oberhalb und unterhalb des Kragens 12 durch jeweils halbzylindrische Aufnahmeschalen 20 ergänzt. Die Aufnahmeschalen 20 liegen sich in der zusammengefügten Position der Hälften 13, 14 gegenüber und begrenzen einen Zylinderraum oberhalb und unterhalb des Kragens 12. In diesem Zylinderraum können die Hülsen 10, 11 eingesteckt werden und je nach Abmessungen des Zylinderraums sogar klemmend fixiert werden. Dadurch wird sichergestellt, dass sich das Verbindungselement 1 auch bei ungleichmäßiger, einseitiger Belastung nicht gegenüber dem Tragelement zu stark abwinkelt. Zudem wird dadurch sichergestellt, dass sich die Hülsen 9, 10 in fluchtender Anordnung befinden und vorzugsweise vollflächig auf dem Kragen 12 aufliegen.

An den jeweiligen Flanschen 16, 17 befinden sich zylindrische Aufnahmen 21, 22 einmal für einen Schraubbolzen und einmal für eine Mutter. Die Aufnahme 22 für die Mutter verhindert, dass sich die Mutter beim Einschrauben des Bolzens mitdreht. Die Mutter muss lediglich in die Aufnahme 22 eingesteckt werden. Ein Verbinden der beiden Hälften 13, 14 ist nur durch Drehen des Schraubbolzens möglich, der sich hierzu in der passenden Aufnahme 21 an der jeweils anderen Hälfte 13, 14 befindet. Es ist zu erkennen, dass an dem oberseitigen Flansch 16 jeweils eine Aufnahme 22 und eine Aufnahme 21, d. h. ein Bolzen und eine Mutter einer Schraubverbindung 18 angeordnet sind. Genauso verhält es sich an dem unterseitigen Flansch 17. Auch dort sind, obwohl es vier Schraubverbindungen 18 sind, je Hälfte 13, 14 zwei Bolzen und zwei Muttern angeordnet, so dass die beiden Hälften 13, 14 vollkommen identisch konfiguriert sind. Es handelt sich bei den Hälften 13, 14 um identische Bauteile, die jedoch bei einem aneinanderfügen im Bereich der Flansche 16, 17 zusammenpassen und über die Schraubverbindungen miteinander koppelbar sind.

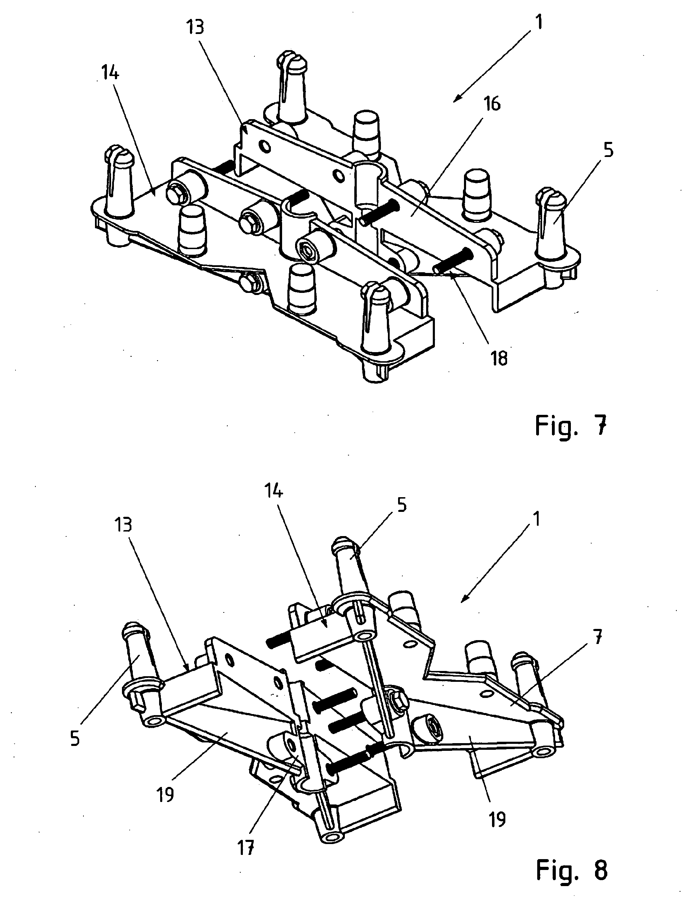

Der Ausführungsform der Figuren 7 und 8 unterscheidet sich von denjenigen der Figuren 5 und 6 dadurch, dass der oberseitige Flansch 16 nunmehr vier statt nur zwei Schraubverbindungen 18 aufweist. Dahingegen sind an dem unterseitigen Flansch 17 nur noch zwei Schraubverbindungen 18 ausgebildet. Folglich ist der oberseitige Flansch 16 wesentlich größer, während der unterseitige Flansch 17 viel kleiner ist als bei dem ersten Ausführungsbeispiel. Auch die Streben 19, welche den unterseitigen Flansch 17 mit der Grundplatte 7 verbinden haben aufgrund der unterschiedlichen Krafteinleitungspunkte einen anderen Verlauf. Sie weisen bei dem Ausführungsbeispiel der Figuren 7 und 8 bis zu den eckseitigen Zapfen 5. Im Übrigen wird auf die Erläuterung der Figur 6 Bezug genommen.

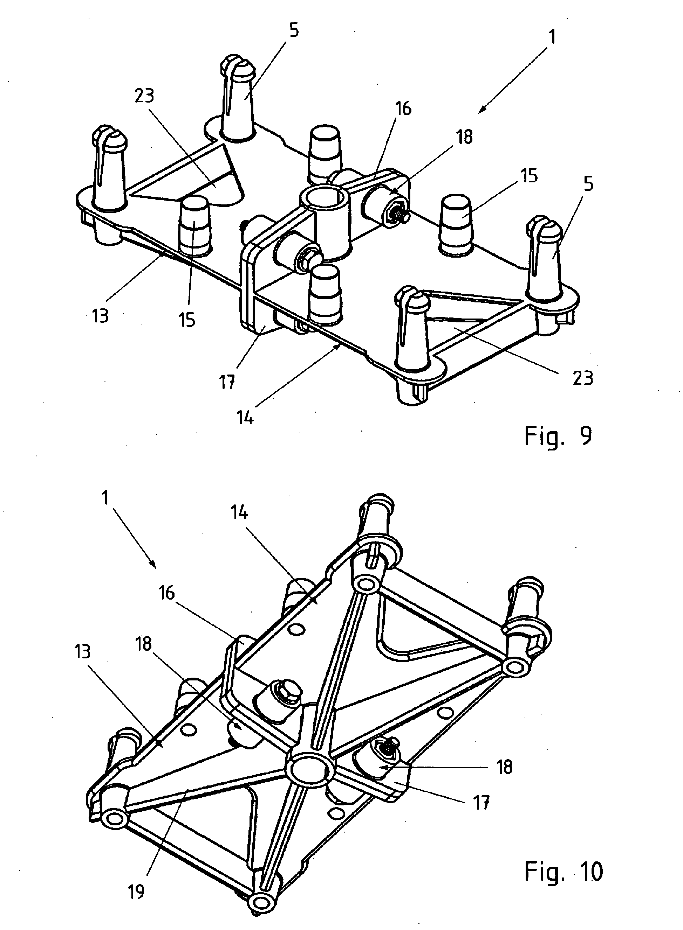

Das Ausführungsbeispiel der Figuren 9 und 10 unterscheidet sich von den beiden vorhergehenden dadurch, dass die Teilungsebene zwischen den beiden Hälften 13, 14 nun nicht mehr in Längsrichtung, d. h. parallel zu der längeren Seite der im Wesentlichen rechteckigen Grundplatte 7 verläuft, sondern quer zur Längsrichtung. Die Anordnung der Zapfen 5, 15 ist identisch zu der vorhergehenden Variante. Auch handelt es sich nach wie vor um Schraubverbindungen 18 in entsprechend oberseitigen und unterseitigen Flanschen 16, 17. Aus Platzgründen kommen bei dieser Ausführungsform allerdings nur vier Schraubverbindungen 18 anstelle von sechs Schraubverbindungen zum Einsatz. Insgesamt ist diese Ausführungsform daher etwas leichter. Darüber hinaus ergibt sich die Möglichkeit, in der Grundplatte 7 Öffnungen 23 vorzusehen, die zu Gewichtseinsparungen beitragen. Die Öffnungen 23 in der Grundplatte 7 sind allseitig von der Grundplatte 7 umgeben bzw. begrenzt. Bei der Ausführungsform der Figuren 1 bis 8 war hingegen nur eine randseitige Einkerbung im mittleren Bereich der Längsseitgen vorgesehen. Diese etwa dreieckförmige Einkerbung dient ebenfalls der Gewichtsersparnis.

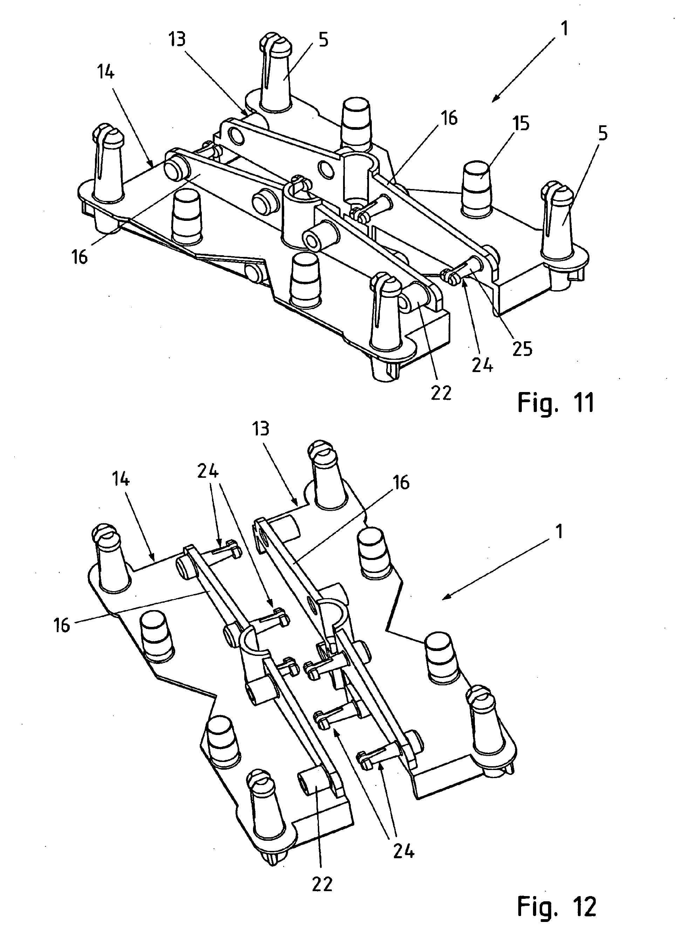

Die Figuren 11 und 12 zeigen eine Alternative zu den Schraubverbindungen. Anstelle von Verschraubungen kommen bei der Variante in den Figuren 11 und 12 Schnappverbindungen zum Einsatz. Es handelt sich um eine Ausführungsform mit Längsteilung genauso wie bei der Variante gemäß der Figuren 7 und 8. Auch sind die Schnappverbindungen 24 genauso positioniert wie die Schraubbolzen der Schraubverbindungen 18 in Figur 5. Am oberseitigen Flansch 16 befinden sich insgesamt vier Schnappverbindungen 24. Jeweils zwei in Richtung zur gegenüberliegenden Hälfte 13, 14 vorstehende Zapfen 25 und zwei Zapfenaufnahmen sind an jedem Flansch 16 ausgebildet. An der Unterseite der Grundplatte 7 befinden sich genauso wie bei dem Ausführungsbeispiel der Figur 7 nur zwei Schnappverbindungen 24. Beim Zusammenfügen der Hälften 13, 14 werden die Bolzen 25 der Schnappverbindungen in die korrespondierenden Aufnahmen 22 des anderen Flansches 16 eingeführt. Wenn die Endlage erreicht ist, federn die Zapfen 25 endseitig auseinander und schnappen mit ihrem Kopf hinter den mündungsseitigen Kragen der Aufnahmen 22, so dass die beiden Hälften 13, 14 fest miteinander verbunden sind. Die Zapfen 25 der Schnappverbindungen sind gegabelt ausgeführt, d. h. die Zapfen 25 sind vom freien Ende her bis zu einer bestimmten Länge zweigeteilt. Die jeweils etwa halbzylindrischen Längshälften der Zapfen können im Bereich der Teilungsebene einander angenähert werden. Durch die Eigenspannung des Materials streben die beiden Längshälften des Zapfens aber in ihrer Ausgangslage zurück, so dass ein endseitig verdickter Kopf an den beiden Hälften hinter den mündungsseitigen Kragen an den Aufnahmen 22 schnappen kann und den Zapfen 25 am herausziehen aus der Aufnahme 22 hindert.

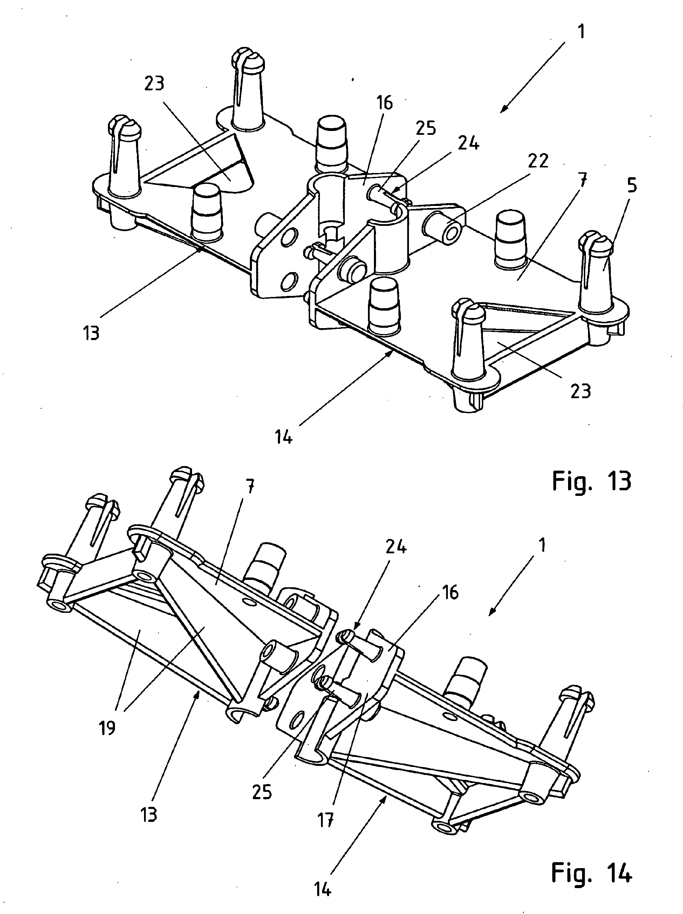

Die Figuren 13 und 14 zeigen eine Variante mit einer Schnappverbindung, die entsprechend der Ausführungsform der Figuren 9 und 10 eine Querteilung des Verbindungselements 1 vorsieht. Das heißt die Zapfen 25 der Schnappverbindungen 24 weisen nun in Längsrichtung des Verbindungselements 1, um in Aufnahmen 22 einen korrespondierenden Flansches 16 der anderen Hälfte 14 zufassen. Genauso wie bei dem Ausführungsbeispiel der Figuren 11 und 12 können die Zapfen 25 materialeinheitlich einstückiger Bestandteil der jeweiligen Hälften 13, 14 sein. Die Hälften 13, 14 können ohne Werkzeug durch einfaches Zusammenstecken gefügt werden. Dadurch kann die Montage noch rascher erfolgen. Bei der Demontage müssen lediglich die Köpfe der Zapfen zusammengedrückt werden und die beiden Hälften 13, 14 können wieder voneinander getrennt werden. Im Übrigen wird auf die Erläuterungen der Figuren 9 und 10 Bezug genommen, welche hinsichtlich der Anordnung der nach oben von der Grundplatte 7 abstehenden Zapfen 5 und 15 identisch ist. Es finden sich auch dieselben dreieckförmigen Öffnungen 23 in der Grundplatte 7, welche zur Gewichtsersparnis vorgesehen sind.

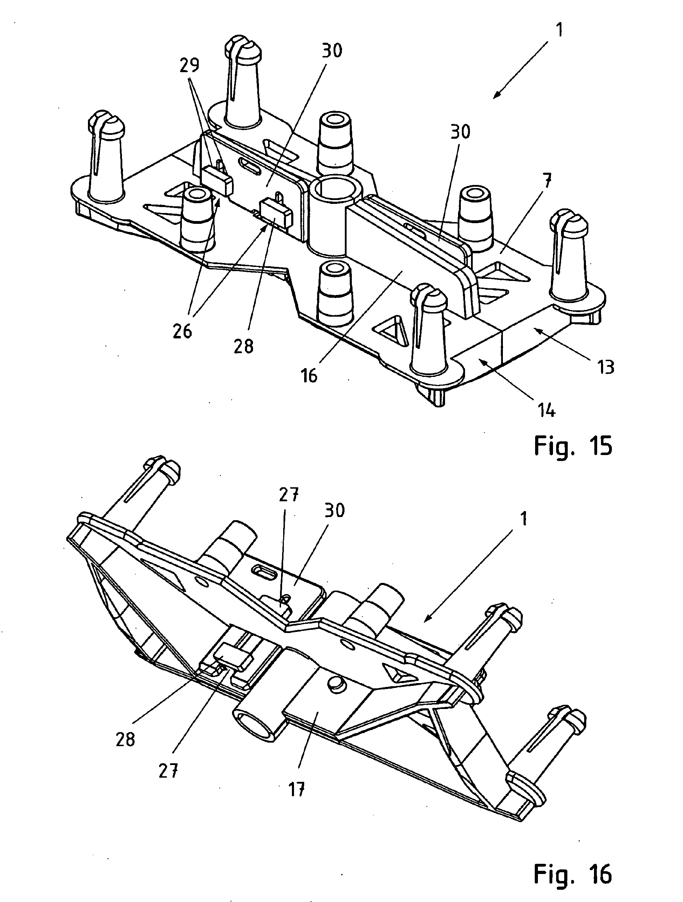

Alternativ zu einer Schnappverbindung sieht die Erfindung auch eine Variante mit einer Steckverbindung zwischen den beiden Hälften 13, 14 vor. Beispiele für solche Steckverbindungen zeigen die Figuren 15 bis 20. In Figur 15 ist das zweigeteilte Verbindungselement 1 wiederum in zwei Hälften 13, 14 gegliedert. Es handelt sich um eine längsseitige Teilung des Verbindungselements 1. Oberseitig sowie unterseitig der Grundplatte 7 befinden sich wiederum Flansche 16, 17, die sich in der Einbaulage gegenüberliegen. Es fällt auf, dass bei dieser Bauform die bei den vorhergehenden Ausführungsformen vorhandenen zylinderförmigen Aufnahmen 21, 22 die rückwärtig von den Flanschen 16, 17 abstehen, bei dieser Ausführungsform entfallen. Stattdessen sind bei der Steckverbindung 26 Bolzen 27 mit einem rechteckigen und gegenüber dem Bolzenschaft verbreiterten Bolzenkopf 20 vorgesehen, Dadurch ist im Verhältnis zum Schaft des Bolzens 27 eine Hinterschneidung 29 seitlich des Bolzenschaftes entstanden. Bei diesem Ausführungsbeispiel steht der Bolzenkopf 28 auf zwei Seiten gegenüber dem Bolzenschaft 27 vor, so dass es seitlich des Bolzenschaftes 27 Hinterschneidungen 29 gibt.

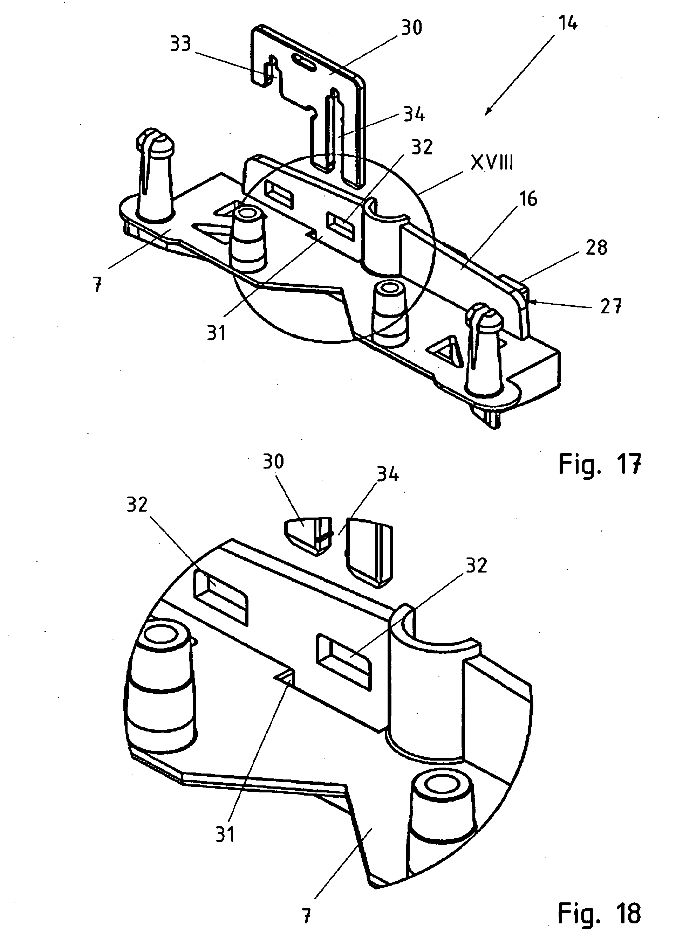

Figur 15 zeigt, dass zusätzlich ein Sicherungselement 30 an dem Verbindungselement 1 befestigt ist. Das Sicherungselement 30 ist außerhalb der Einbaulage in Figur 17 dargestellt. Es ist im Wesentlichen L-förmig konfiguriert und dafür vorgesehen, an Öffnungen 32 im Flansch 16 positioniert zu werden, nachdem die Bolzen 27 durch die Öffnungen 32 gesteckt worden sind. Die Öffnungen 32 sind rechteckig konfiguriert, damit der Bolzenkopf 28 durch die Öffnungen 32 geführt werden kann. In der Zusammenbaulage befindet sich der Bolzenkopf 28 im Abstand von den Öffnungen 32, so dass ein Spalt verbleibt. In diesem Spalt wird das Sicherungselement 30 eingefügt, wobei das Sicherungselement in die Hinterschneidungen 29 fasst. Das Sicherungselement 30 soll dabei gleichzeitig drei Steckverbindungen 26 sichern. Figur 17 lässt erkennen, dass das Sicherungselement 30 hierfür schlitzförmige Ausnehmungen 33, 34 besitzt. Die in der Bildebene linke Ausnehmung 33 ist kürzer. Sie dient nur zur Fixierung eines einzelnen Bolzens 27, der durch den oberen Flansch 16 geführt wird. Die in der Bildebene der Figur 17 rechte Ausnehmung 34 ist länger. Dementsprechend ist das Sicherungselement 30 im Wesentlichen L-förmig konfiguriert. Die längere Ausnehmung 34 dient nicht nur dazu den Bolzen 27, der durch den oberen Flansch 16 geführt wird, zu sichern, sondern auch den Bolzen 27, durch den unteren Flansch 17 geführt wird (Figur 16). Hierzu befindet sich eine Öffnung 31 in der Grundplatte 7 auf der rückwärtigen Seite des Flansches 16. Die gabelförmigen Zinken des längeren L-förmigen Schenkels des Sicherungselementes 30 durchgreifen die Öffnung 31 und hintergreifen den Bolzenkopf 28 in seiner Einbaulage. Mit einem einzigen Sicherungselement 30 können daher drei Steckverbindungen 26 fixiert werden.

Figur 15 zeigt, dass zwei derartige Sicherungselemente 30 vorgesehen sind. Insgesamt sind die beiden Hälften 13, 14 durch sechs Steckverbindungen 26 gesichert.

Der Vorteil dieser Verbindungstechnik besteht darin, dass die Montage werkzeuglos erfolgen kann. Auch wenn eine Schnappverbindung dieselben Vorteile bietet, gestattet eine Steckverbindung darüber hinaus auch eine werkzeuglose Demontage, was das Auswechseln der Verbindungselemente erleichtert.

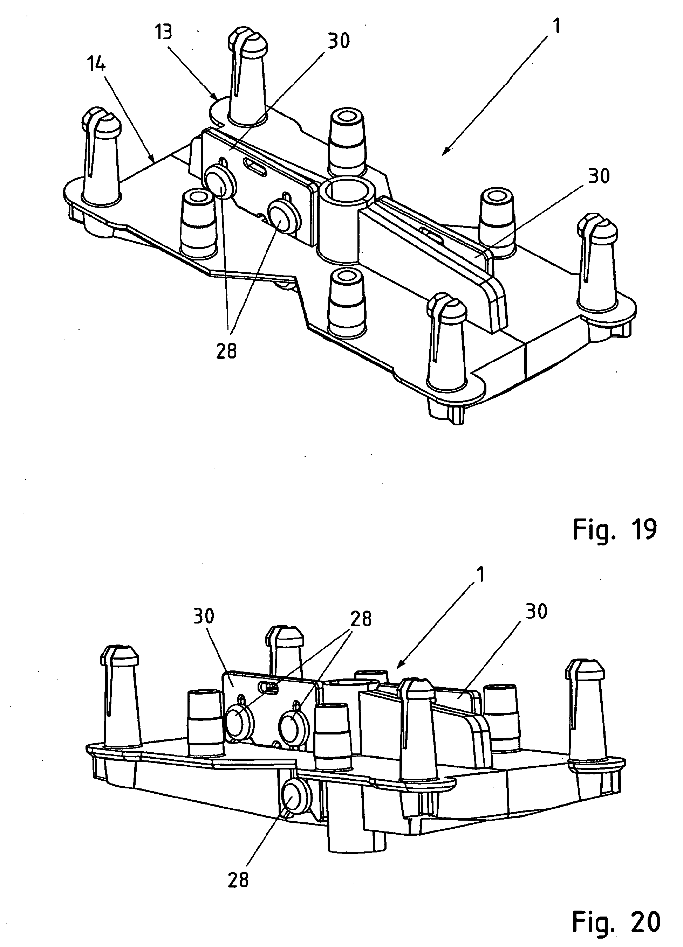

Das Ausführungsbeispiel der Figuren 19 und 20 unterschiedet sich von demjenigen der Figuren 15 bis 17 dadurch, dass der Bolzenkopf 28 nicht eckig sondern kreisrund konfiguriert ist. Zudem zeigt Figur 20 sehr anschaulich, wie durch das Sicherungselement 30 gleichzeitig drei Steckverbindungen 26 gesichert werden können. Im Übrigen wird auf die Beschreibung der Figuren 15 bis 18 verwiesen.

### Bezugszeichen:

1 - Verbindungselement
2 - Gitterelement
3 - Gitterelement
4 - Gitterelement
5 - Zapfen
6 - Öffnungen
7 - Grundplatte
8 - Durchgangsöffnung
9 - Tragelement
10 - Hülse
11 - Hülse
12 - Kragen
13 - Hälfte
14 - Hälfte
15 - Zapfen
16 - Flansch
17 - Flansch
18 - Schraubverbindung
19 - Strebe
20 - Aufnahmeschale
21 - Aufnahme
22 - Aufnahme
23 - Öffnung
24 - Schnappverbindung
25 - Zapfen
26 - Steckverbindung
27 - Bolzen
28 - Bolzenkopf
29 - Hinterschneidung
30 - Sicherungselement
31 - Öffnung
32 - Öffnung
33 - Ausnehmung

## Patentansprüche

1. Verbindungselement für Gittereinbauten mit folgenden Merkmalen:
a. Das Verbindungselement (1) besitzt eine horizontale Grundplatte (7) mit von der Grundplatte (7) nach oben weisenden Zapfen (5, 15), die für den Eingriff mit einem Gitterelement (2-4) vorgesehen sind;
b. In der Grundplatte (7) befindet sich eine vertikale Durchgangsöffnung (8), welche in der Einbaulage von einem stangen- oder seilförmigen Tragelement (9) durchsetzt ist;
c. Die Durchgangsöffnung (8) ist von einem Kragen (12) an der Grundplatte umgeben, wobei der Kragen (12) als Auflager für eine das Tragelement (9) umgebende Hülse (10, 11) dient;
**dadurch gekennzeichnet,**
d. **dass** das Verbindungselement (1) aus zwei Hälften (13, 14) besteht, wobei die Durchgangsöffnung (8) teilweise in der einen Hälfte (13) und teilweise in der anderen Hälfte (14) liegt, so dass die Hälften (13, 14) unter Einschluss des Tragelements (9) lösbar miteinander koppelbar sind.

2. Verbindungselement nach Anspruch 1, **dadurch gekennzeichnet, dass** die Hälften (13, 14) über wenigstens eine Schraubverbindung (18) miteinander koppelbar sind.

3. Verbindungselement nach Anspruch 1, **dadurch gekennzeichnet, dass** die Hälften (13, 14) über wenigstens eine Schnappverbindung (24) miteinander koppelbar sind.

4. Verbindungselement nach Anspruch 1, **dadurch gekennzeichnet, dass** die Hälften (13, 14) über wenigstens eine Steckverbindung (26) miteinander koppelbar sind, wobei die Steckverbindung (16) einen Bolzen (27) umfasst mit einem Bolzenkopf (28), der eine Hinterschneidung (29) besitzt, wobei in der Einbaulage ein Sicherungselement (30) in die Hinterschneidung (29) fasst und den Bolzen (27) fixiert.

5. Verbindungselement nach Anspruch 4, **dadurch gekennzeichnet, dass** oberhalb und unterhalb der Grundplatte (7) liegende Koppelelemente in Form von Bolzen (27) einer Steckverbindung (26) mittels eines gemeinsamen Sicherungselements (30) fixierbar sind, welches eine Öffnung (31) in der Grundplatte (7) durchsetzt.

6. Verbindungselement nach einem der Ansprüche 1 bis 5, **dadurch gekennzeichnet, dass** oberhalb der Grundplatte (7) mehr Koppelelemente angeordnet sind, als unterhalb der Grundplatte (7).

7. Verbindungselement nach einem der Ansprüche 1 bis 6, **dadurch gekennzeichnet, dass** Koppelelemente zum Koppeln der beiden Hälften (13, 14) zumindest teilweise materialeinheitlich einstückiger Bestandteil der der Hälften sind.

8. Verbindungselement nach einem der Ansprüche 1 bis 7, **dadurch gekennzeichnet, dass** die Hälften aus Kunststoff bestehen.

9. Verbindungselement nach einem der Ansprüche 1 bis 8, **dadurch gekennzeichnet, dass** es länger als breit ist, wobei eine Trennebene zwischen den Hälften (13, 14) in Längsrichtung des Verbindungselements (1) verläuft.

10. Verbindungselement nach einem der Ansprüche 1 bis 8, **dadurch gekennzeichnet, dass** es länger als breit ist, wobei eine Trennebene zwischen den Hälften (13, 14) senkrecht zur Längsrichtung verläuft.

## Claims

1. Connecting element for grid-like internal fittings, having the following features:
a. the connecting element (1) has a horizontal base plate (7) having pins (5, 15) which point upwards from the base plate (7) and are intended to engage with a grid element (2-4);
b. a vertical through-opening (8), through which, when in the installed position, a rod-like or cable-like support element (9) passes, is located in the base plate (7);
c. the through-opening (8) is surrounded by a collar (12) on the base plate, the collar (12) being used as a bearing for a sleeve (10, 11) which surrounds the support element (9);
**characterised in that**
d. the connecting element (1) consists of two halves (13, 14), part of the through-opening (8) being in one half (13) and part being in the other half (14) such that the halves (13, 14) can be releasably coupled together while the support element (9) is locked therebetween.

2. Connecting element according to claim 1, **characterised in that** the halves (13, 14) can be coupled together by means of at least one screw connection (18).

3. Connecting element according to claim 1, **characterised in that** the halves (13, 14) can be coupled together by means of at least one snap connection (24).

4. Connecting element according to claim 1, **characterised in that** the halves (13, 14) can be coupled together by means of at least one plug connection (26), the plug connection (16) comprising a bolt (27) having a bolt head (28) which has an undercut (29), a securing element (30) catching in the undercut (29) when in the installed position and fixing the bolt (27) in position.

5. Connecting element according to claim 4, **characterised in that** coupling elements, in the form of bolts (27) of a plug connection (26), located above and below the base plate (7) can be fixed in position by means of a common securing element (30) which passes through an opening (31) in the base plate (7).

6. Connecting element according to any of claims 1 to 5, **characterised in that** more coupling elements are arranged above the base plate (7) than below the base plate (7).

7. Connecting element according to any of claims 1 to 6, **characterised in that** at least some of the coupling elements for coupling the two halves (13, 14) are an integral component of the halves and made of the same material.

8. Connecting element according to any of claims 1 to 7, **characterised in that** the halves consist of plastics material.

9. Connecting element according to any of claims 1 to 8, **characterised in that** said element is longer than it is wide, a separation plane extending between the halves (13, 14) in the longitudinal direction of the connecting element (1).

10. Connecting element according to any of claims 1 to 8, **characterised in that** said element is longer than it is wide, a separation plane extending between the halves (13, 14) perpendicularly to the longitudinal direction.

## Revendications

1. Élément de liaison pour éléments encastrés à grille, avec les caractéristiques suivantes :
a. l'élément de liaison (1) a un fond horizontal (7) avec des pivots (5, 15) qui sont dirigés vers le haut à partir du fond (7) et qui sont prévus pour une mise en prise avec un élément à grille (2 à 4) ;
b. dans le fond (7) se trouve une ouverture de passage verticale (8) qui est traversée, en position montée, par un élément porteur (9) en forme de barre ou de corde ;
c. l'ouverture de passage (8) est entourée par un col (12) au niveau du fond, le col (12) servant d'appui pour un manchon (10, 11) entourant l'élément porteur (9) ;
**caractérisé en ce que**
d. l'élément de liaison (1) est constitué de deux moitiés (13, 14), l'ouverture de passage (8) se situant en partie dans une moitié (13) et en partie dans l'autre moitié (14) de telle sorte que les moitiés (13, 14) peuvent être couplées l'une à l'autre de manière amovible avec inclusion de l'élément porteur (9).

2. Élément de liaison selon la revendication 1, **caractérisé en ce que** les moitiés (13, 14) peuvent être couplées l'une à l'autre par l'intermédiaire d'au moins un assemblage à vis (18).

3. Élément de liaison selon la revendication 1, **caractérisé en ce que** les moitiés (13, 14) peuvent être couplées l'une à l'autre par l'intermédiaire d'au moins un assemblage à enclenchement (24).

4. Élément de liaison selon la revendication 1, **caractérisé en ce que** les moitiés (13, 14) peuvent être couplées l'une à l'autre par l'intermédiaire d'au moins un assemblage à enfichage (26), l'assemblage à enfichage (16) comprenant un boulon (27) avec une tête de boulon (28) qui a une contre-dépouille (29), un élément de fixation (30) pénétrant dans la contre-dépouille (29) en position montée et fixant ainsi le boulon (27).

5. Élément de liaison selon la revendication 4, **caractérisé en ce que** des éléments de couplage situés au-dessus et au-dessous du fond (7) sous la forme de boulons (27) d'un assemblage par enfichage (26) peuvent être fixés au moyen d'un élément de fixation (30) commun qui passe par une ouverture (31) dans le fond (7).

6. Élément de liaison selon l'une des revendications 1 à 5, **caractérisé en ce qu'**il est agencé au-dessus du fond (7) plus d'éléments de couplage qu'au-dessous du fond (7).

7. Élément de liaison selon l'une des revendications 1 à 6, **caractérisé en ce que** des éléments de couplage pour le couplage des deux moitiés (13, 14) sont au moins en partie des parties d'une seule pièce et en un seul matériau des moitiés.

8. Élément de liaison selon l'une des revendications 1 à 7, **caractérisé en ce que** les moitiés sont en plastique.

9. Élément de liaison selon l'une des revendications 1 à 8, **caractérisé en ce qu'**il est plus long que large, un plan de séparation entre les moitiés (13, 14) s'étendant dans le sens de la longueur de l'élément de liaison (1).

10. Élément de liaison selon l'une des revendications 1 à 8, **caractérisé en ce qu'**il est plus long que large, un plan de séparation entre les moitiés (13, 14) s'étendant perpendiculairement au sens de la longueur.
